# FASCICULE DE BREVET EUROPEEN

(11) **EP 1 518 744 B1**
(45) Date de publication et mention de la délivrance du brevet: **15.07.2009**
(21) Numéro de dépôt: 04356156.2
(22) Date de dépôt: 24.09.2004
(51) Int. Cl.: B60N 2/235

(54) **Mécanisme d'articulation de dossier à variation angulaire séquencée**
Rückenlehnegelenkbeschlag mit zeitlich abgestufter Winkelverstellung
Backrest articulation with a sequenced variation of the angular position.

(30) Priorité: 25.09.2003 FR 0311254
(43) Date de publication de la demande: 30.03.2005
(73) Titulaire: GRUPO ANTOLIN-INGENIERIA, S.A., 09080 Burgos (ES)
(72) Inventeur: Chabanne, Jean-Pierre, 89710 Champvallon (FR); Gagnaire, Eric, 42600 Savigneux (FR)
(74) Mandataire: Delorme, Nicolas

(56) Documents cités:
- EP-A- 0 776 781
- US-A- 4 762 366
- US-A- 5 154 476
- US-A- 5 788 330
- US-B1- 6 345 867
- US-B1- 6 447 066
- PATENT ABSTRACTS OF JAPAN vol. 017, no. 591 (C-1125), 28 octobre 1993 (1993-10-28) & JP 05 176819 A (TOKYO SEAT KK), 20 juillet 1993 (1993-07-20)

## Description

La présente invention se situe dans le domaine des sièges pour véhicule automobile et concerne un mécanisme d'articulation entre le dossier et l'assise d'un siège.

De nombreux véhicules automobiles de type monospace sont équipés de trois rangées de sièges dits sièges de rang un à trois ce qui leur permet d'embarquer jusqu'à huit passagers.

Les sièges de rang un sont en regard des portes avant du véhicule et les sièges du rang deux sont en regard des portes arrières du véhicule ; l'accès à ces deux rangées de sièges se fait donc très aisément.

En revanche, l'accès aux sièges de rang trois peut présenter certaines difficultés puisque les passagers ne peuvent prendre place sur ces sièges qu'à partir des portes arrières du véhicule.

Il est donc souhaitable que les sièges de rang deux qui, d'une certaine manière, "barrent" l'accès aux sièges de rang trois puissent temporairement ouvrir l'accès aux sièges de rang trois.

Par ailleurs, les sièges de rang deux comme tout siège du véhicule doivent offrir un réglage de l'inclinaison de son dossier pour le confort du passager.

Enfin, ces sièges doivent pouvoir être escamotés pour augmenter le volume de chargement du compartiment arrière du véhicule.

On constate ainsi que certains sièges doivent pouvoir être utilisés selon des réglages angulaires correspondant à des utilisations particulières. Il s'agit, notamment les sièges de rang deux mais également d'autres sièges tels que des sièges de rang un de véhicules à deux portes.

Du document US 6345867 on connait un dispositif de réglage, qui montre les caractéristiques du préambule de la revendication 1.

Un but de l'invention est donc de proposer un siège dont le dossier peut s'incliner suivant des séquences de réglage correspondant à des modes d'utilisation privilégiés du siège.

L'invention concerne un dispositif selon la revendication 1.

Ainsi, l'idée de base de la présente invention consiste à prévoir des limitations du déplacement angulaire du dossier par rapport à l'assise selon des séquences prédéterminées qui correspondent à des mises en oeuvre privilégiées du siège par un utilisateur. Ces séquences angulaires sont définies par les surfaces de butées contre lesquelles la dent du cliquet vient en appui. Le pivotement du cliquet permet de passer d'une séquence à la séquence suivante, puisque le pivotement du cliquet permet de dégager la dent d'une surface de butée.

Pour assurer le verrouillage du dossier par rapport à l'assise, le dispositif présente :
- un flasque fixe lié à l'assise du siège supportant le secteur denté,
- un flasque mobile lié au dossier sur lequel sont fixés, de manière pivotante, une platine présentant le secteur denté et une bague munie d'une came venant en appui contre la platine en configuration verrouillée du siège.

La bague peut être équipée d'une manette pour permettre à un utilisateur de régler l'inclinaison du siège.

Dans une forme de réalisation particulièrement avantageuse, l'élément présentant un secteur en gradin est constitué par une couronne présentant :
- une première surface convexe délimitée par deux surfaces en butée,
- une deuxième surface convexe et une troisième surface convexe reliée à la deuxième surface convexe par une surface de butée.

Cette disposition des surfaces en gradins permet de définir trois séquences angulaires qui correspondent à trois modes d'utilisation du siège. En effet, dans le cas où la dent du cliquet est en contact de la première surface convexe, la rotation du dossier (dans la mesure où les deux secteurs dentés sont désengrenés) est bornée par les deux surfaces de butée encadrant la première surface d'appui. Ce secteur angulaire correspond au réglage du siège pour une position de confort dans laquelle le dossier est plus ou moins incliné vers l'arrière, en fonction de l'inclinaison désirée du buste du passager.

Lorsque la dent du cliquet est dégagée d'une surface d'appui, elle suit la deuxième surface convexe jusqu'à venir en contact d'une nouvelle surface d'appui. Cette nouvelle limitation angulaire correspond à une position du dossier dans laquelle celui-ci est incliné en direction de l'assise pour libérer l'accès à l'espace en arrière du siège.

Enfin, lorsque le cliquet est à nouveau pivoté, la dent est dégagée de la surface d'appui et le dossier peut alors se rabattre totalement en direction de l'assise.

Selon une forme de réalisation préférée, le dispositif comprend au moins une palette articulée en rotation comprenant une patte susceptible de venir en appui contre le cliquet pour le faire pivoter autour de son axe en vue du dégagement de la dent d'une surface de butée.

En outre, le cliquet présente un ergot contre lequel la patte de la palette vient en appui.

De plus, le cliquet présente une branche arrondie à son extrémité pouvant venir en appui contre une nervure en arc de cercle pratiquée sur la couronne.

Selon une possibilité,
- la bague présente une oreille dans laquelle un pion est engagé, et
- la palette présente une patte pouvant venir en appui contre le pion pour faire pivoter la bague dans une position dans laquelle la came est en regard d'une encoche pratiquée dans la platine.

De plus, la palette présente un axe sur lequel une tringle de commande vient se fixer.

Pour fixer la couronne sur le flasque fixe, la couronne présente un perçage dans lequel s'engage un bossage dépassant du flasque fixe.

Dans une forme d'exécution, le flasque fixe, le flasque mobile présentent chacun une ouverture circulaire, chaque ouverture étant concentrique avec l'axe de rotation du dossier par rapport à l'assise, un palier s'engageant dans chacune des ouvertures.

Pour bloquer le flasque fixe, le dispositif présente une ouverture par laquelle s'engage un organe de fixation sur l'assise.

Selon une possibilité, le dispositif comprend un axe engagé dans le flasque mobile sur lequel pivote la platine et le crochet.

Dans une troisième forme de réalisation, le moyen présentant un secteur en gradin est une plaquette présentant une première surface convexe, une deuxième surface convexe, une troisième surface en gradin délimitées entre elles par deux surfaces de butée.

On note que le cliquet présente une patte susceptible de glisser sur la surface convexe.

De plus, le flasque mobile est prolongé d'une corne venant en appui contre une butée en position inclinée vers l'arrière du dossier.

Pour sa bonne compréhension, l'invention est décrite en référence au dessin ci-annexé représentant à titre d'exemple non limitatif deux formes de réalisation d'un dispositif de réglage de la position angulaire d'un dossier articulé par rapport à une assise selon celle-ci.
Figure 1 est une vue en perspective éclatée d'une première forme de réalisation,
Figure 2 est une vue en perspective de la première forme de réalisation après enlèvement de la palette de commande,

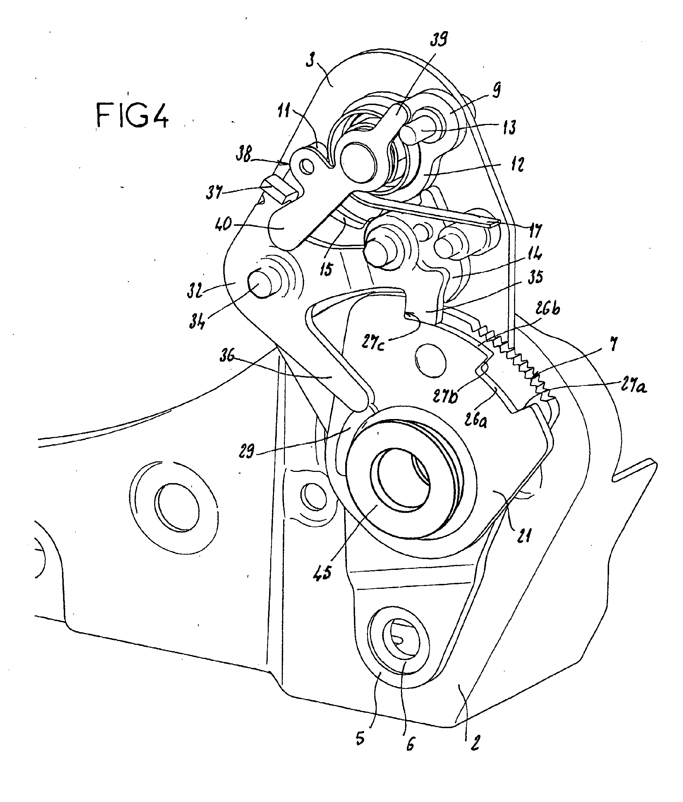

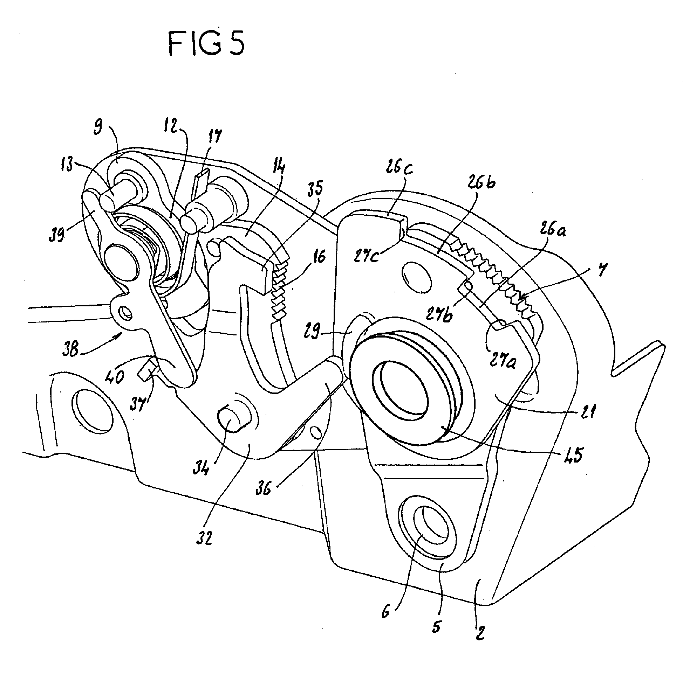

Figures 3, 4 et 5 sont des vues en perspective de cette forme de réalisation en cours de focntionnement,
Figure 6 est une vue de côté d'une deuxième forme de réalisation du dispositif,
Figures 7 et 8 sont des vues de côté d'une troisième forme de réalisation du dispositif,
Figure 9 est une vue en perspective de la troisième forme de réalisation du dispositif,
Figure 10 représente un siège en vue de côté dans plusieurs positions privilégiées.

Il est à noter que les composants communs aux différentes formes de réalisation présentant des références identiques.

Sur le dessin, le dispositif d'articulation du dossier par rapport à l'assise est principalement représenté en omettant la structure générale du siège.

On a cependant représenté sur le dessin, pour ce qui est de l'assise du siège, une partie d'un profilé d'assise 2 ainsi qu'un flasque 3 qui est lié au dossier du siège.

Comme cela existe sur de nombreux sièges, le réglage de l'inclinaison du dossier du siège par rapport à l'assise est réalisé par deux éléments, l'un lié au dossier, l'autre à l'assise, ayant chacun une partie dentée, l'une convexe, l'autre concave.

Ces deux éléments peuvent être temporairement éloignés l'un de l'autre pour que les parties dentées se désengrènent et autorisent ainsi la rotation du dossier par rapport à l'assise autour de l'axe de rotation du siège.

En se reportant au dessin, on peut voir que le dispositif présente donc un flasque fixe 5 qui est lié à l'assise du siège et le flasque 3 mobile qui est lié au dossier.

Le flasque fixe 5 présente une ouverture 6 à travers laquelle est engagé un boulon ou un rivet pour assurer la fixation de ce flasque sur le profilé d'assise 2.

Le flasque fixe 5 présente un secteur denté 7 sur sa bordure supérieure.

Le flasque mobile 3 embarque deux éléments, à savoir :
- une bague 9 présentant une came 10 et une oreille 12 dans laquelle est engagé un pion 13, et
- une platine 14 présentant une encoche 15 dont le profil est complémentaire de celui de la came 10, un prolongement 11 bordant l'encoche 15, et un secteur denté 16 pouvant s'engrener dans le secteur denté 7 du flasque fixe 5.

La bague 9 et la platine 14 sont chacune mobiles en rotation par rapport au flasque mobile 3. On note que la bague 9 est pourvue sur son axe de rotation d'un ressort de rappel 17.

La bague 9 est également équipée d'une manette 18, dont la manipulation permet de faire tourner celle-ci.

Le ressort de rappel 17 agissant sur la bague 9 tend à plaquer la came 10 contre la platine 14, de telle sorte que les secteurs dentés 7 et 16 de la platine 14 et du flasque 5 sont engrenés.

Du fait de l'action de la bague 9, le dossier est fixe par rapport à l'assise. En effet, la came 10 de la bague 9 qui est en appui contre la platine 14 empêche tout mouvement de celle-ci et du dossier, puisqu'elle maintient les secteurs dentés engagés 7 et 16 l'un dans l'autre.

En revanche, lorsque la bague 9 tourne, par exemple, sous l'effet d'une action sur le pion 13, la came 10 se trouve alors en regard de l'encoche 15 ménagée dans la platine 14. La platine 14 tourne alors sous l'action de la came 10 qui vient en appui contre le prolongement 11. Cela permet de dégager le secteur denté 16 de celui de la platine 5 fixe. Dans cette configuration, le dossier est libre en rotation par rapport à l'assise.

Cependant, on comprend que le déplacement en rotation du dossier est sans limitation angulaire. Ceci est donc peu pratique pour un utilisateur qui ne voudrait que légèrement incliner vers l'avant le dossier pour accéder à un siège de rang trois, puisque le dossier aura tendance à se rabattre totalement vers l'avant. Cela obligera l'utilisateur à relever le siège depuis sa position la plus basse.

Pour remédier à cet inconvénient, comme on peut le voir sur le dessin, le siège présente, en outre, des moyens permettant de définir des séquences de déplacement angulaire du dossier, ces séquences correspondent à des besoins privilégiés d'un utilisateur.

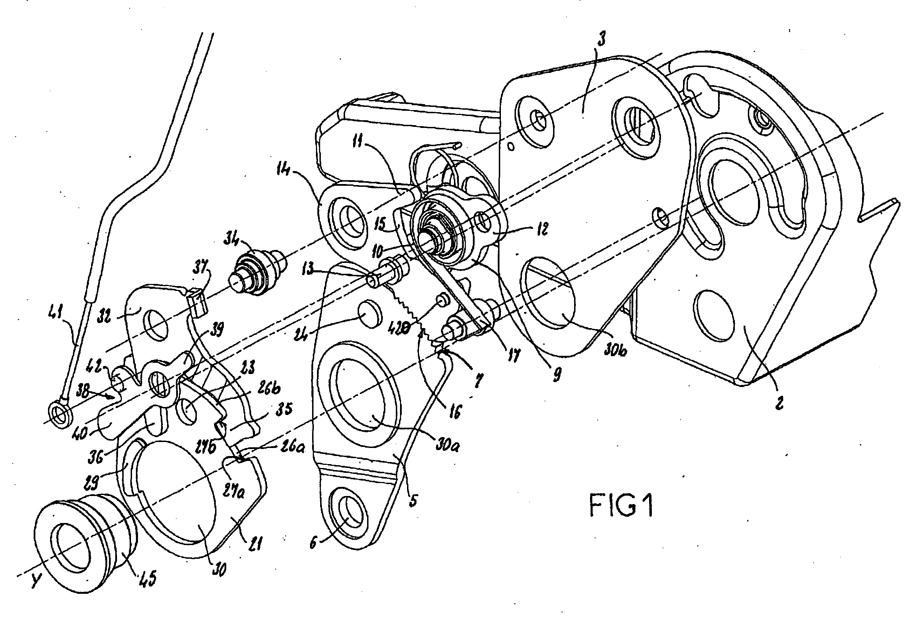

Ainsi, en consultant la figure 1, on peut voir qu'une couronne 21 est fixée sur le flasque fixe 5. Cette couronne 21 présente un perçage 23 dans lequel s'engage un bossage 24 dépassant du flasque fixe 5 qui interdit donc tout déplacement de la couronne 21 par rapport au flasque fixe 5.

La couronne 21 présente un secteur supérieur en gradins. Ces gradins sont délimités par plusieurs butées angulaires.

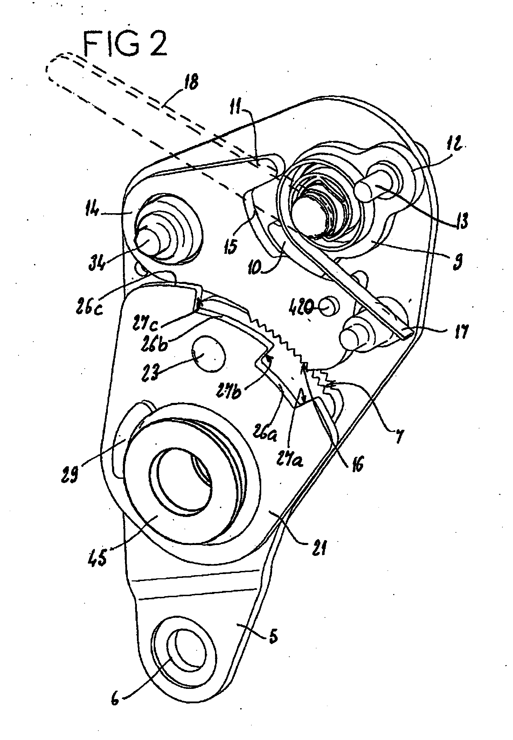

Dans l'exemple représenté sur le dessin à la figure 2, on peut voir que la couronne 21 présente une première surface convexe 26a délimitée par deux surfaces de butée 27a, 27b et une deuxième et une troisième surfaces convexes portant respectivement les références 26b et 26c reliées entre elles par une surface de butée 27c.

Un autre élément essentiel du dispositif est un cliquet 32 qui suit le secteur en gradin de la couronne 21.

Le cliquet 32 tourne sur un axe 34 qui est engagé dans le flasque mobile 3 et sur lequel la platine 14 est également articulée.

On note également que la couronne 21 est dotée d'une nervure 29 adjacente à une ouverture circulaire 30 dont elle est pourvue.

Le cliquet 32 est fixé sur la platine 14 par une liaison pivot autorisant sa rotation par rapport à la platine 14.

Comme on peut le voir sur le dessin, le cliquet 32 présente une branche munie d'une dent 35 qui vient en appui contre le profil en gradin de la couronne 21 ; une branche 36 ayant une extrémité arrondie ; et un ergot 37.

Un point qu'il est important de noter concernant le cliquet 32 est que la branche arrondie 36 et l'ergot 37 sont chacun dans un plan déporté par rapport au plan de la branche munie de la dent 35.

Ainsi, dans l'empilement de pièces constituant le mécanisme, le cliquet 32 se trouve dans le même plan que celui de la couronne 21, mais la branche arrondie 36 du cliquet 32 et l'ergot 37, se trouvent chacun dans un plan déporté.

On note également que la couronne 21, le flasque fixe 5, le flasque mobile 3 présentent respectivement une ouverture circulaire 30,30a,30b, chaque ouverture étant concentrique avec l'axe de rotation Y du dossier par rapport à l'assise, un palier 45 s'engageant dans chacune des ouvertures.

Le dernier composant majeur du dispositif est une palette 38 de commande.

Cette palette 38 est montée sur le flasque fixe 5 par une liaison pivot utilisant le même axe de rotation que celui de la bague 9.

La palette 38 présente une première patte 39 qui vient en appui contre le pion 13 de la bague 9 et une seconde patte 40 plus longue que la première. De plus, on peut voir que la palette 38 présente un axe 42 sur lequel vient se fixer une tringle de commande 41.

Le fonctionnement du dispositif va maintenant être décrit en référence aux figures du dessin.

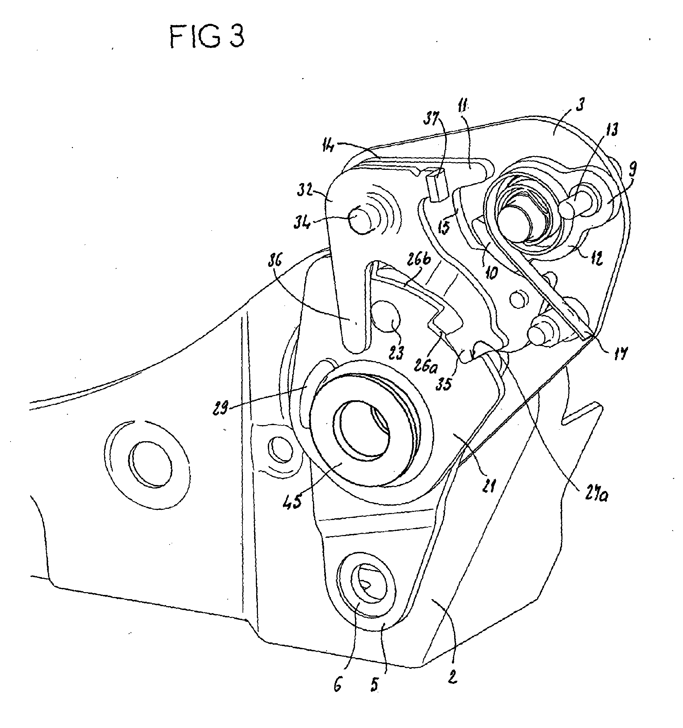

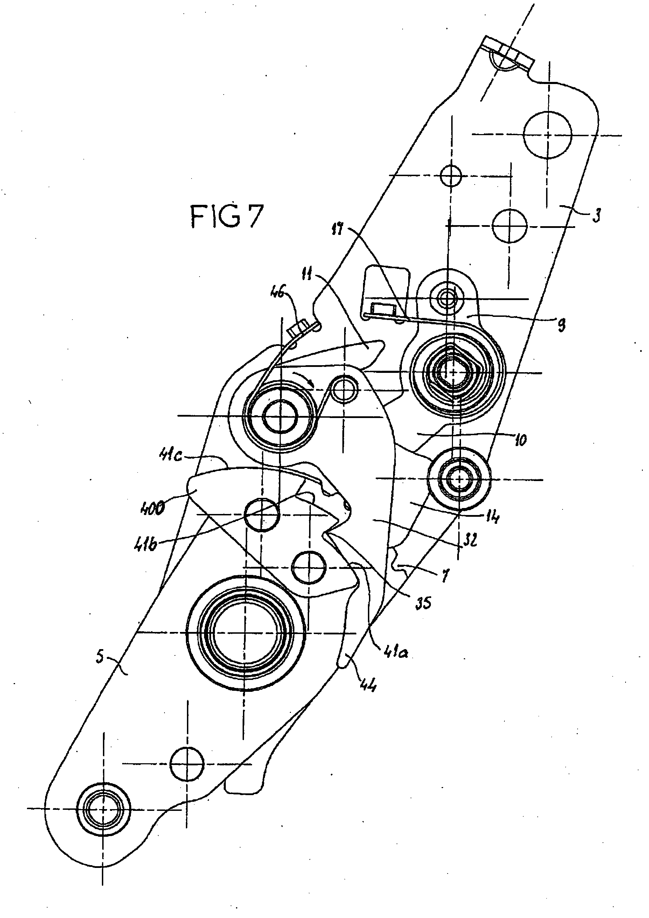

La figure 3 représente le dispositif dans une configuration dans laquelle le siège est dans sa position d'utilisation habituelle dans laquelle le dossier est incliné de quelques degrés par rapport à la verticale. Cette position est représentée sur la figure 7 par la lettre A.

Bien que cela n'apparaisse pas sur le dessin, la course de la tringle 41 présente une indexation, c'est-à-dire une correspondance entre la course de la tringle 41 et le déplacement angulaire souhaité par l'utilisateur. Cette indexation peut prendre la forme de pictogrammes en face desquels se place l'extrémité libre de la tringle de commande 41.

Dans le cas où l'utilisateur souhaite incliner le dossier vers l'arrière, il agit sur la manette 18.

La rotation de la bague 9 vient mettre la came 10 en regard de l'encoche 15 pratiquée dans la platine dentée. La came 10 vient en appui contre le prolongement 10 entraînant ainsi la rotation de la platine 14.

La platine 14 bascule alors par rapport à son axe, ce qui a pour effet de désengrener le secteur denté 16 de la platine 14 de celui du flasque fixe 5. Le dossier qui, par l'intermédiaire du flasque mobile 3 est relié à la platine 14, est alors libre en rotation.

Toutefois, et c'est le point essentiel du dispositif selon l'invention, sa rotation est limitée angulairement.

En effet, comme cela apparaît clairement sur la figure 3, la rotation de la platine 14 (et donc in fine du dossier) est bornée par la dent 35 du cliquet 32 qui vient en appui contre les butées angulaires 27a, 27b.

Il est à noter que le maniement de manette 18 agit directement sur la bague 9, mais n'agit en aucune manière sur le cliquet 32. Ainsi, lorsqu'un utilisateur règle l'inclinaison du dossier par l'intermédiaire de la manette 18, il ne peut qu'agir sur l'inclinaison du dossier. Il n'y a donc aucun risque de fausse manoeuvre.

La figure 3 montre le cas dans lequel le dossier se trouve dans sa position extrême arrière puisque la dent 35 du cliquet 32 est en appui contre la butée angulaire extrême arrière.

Dans le cas où l'utilisateur souhaite incliner le dossier vers l'avant pour accéder à l'espace situé en arrière du dossier pour l'amener vers une position représentée par la lettre C, il exerce une nouvelle traction sur la tringle 41.

Cette traction, qui induit une course supérieure à celle indiquée dans le cas précédent, se traduit comme précédemment par la mise en appui de la patte 39 de la palette 38 contre le pion 13 de la bague 9 et par la même cinématique que celle décrite précédemment, le secteur denté 16 de la platine 14 se désengrène de celui du flasque fixe 5.

Cependant, la course plus importante de la tringle 41 de commande fait que la patte 40 de la palette 38 vient en butée contre l'ergot 37 du cliquet 32 et fait tourner celui-ci. Au cours de la rotation du cliquet 32, la dent 35 se dégage de la surface en butée 27b. Ceci autorise alors la rotation de la platine 14 dentée solidaire du flasque mobile 3 (et, in fine, du dossier) vers l'avant.

Cette rotation est limitée par la présence de la butée angulaire 27c contre laquelle la dent du cliquet vient en appui.

Dans le cas, où l'utilisateur souhaite rabattre le dossier contre l'assise, il exerce une traction sur la tringle 41 pour que la patte 40 de la palette 38 fasse tourner le cliquet 32 d'un angle tel que la dent 35 se dégage de la butée angulaire 27c.

Rien ne s'oppose alors à la rotation de la platine 14 dentée et donc du dossier du siège par rapport à l'assise.

On note que, au cours de cette rotation, le cliquet 32 est maintenu par un pion 420 dépassant de la platine 14 et par sa patte arrondie 36 qui glisse contre la nervure 29 de la couronne 21. Ainsi, lorsque l'utilisateur relâche la tringle de commande, la patte 36 qui est en appui contre la nervure 29 empêche le retour de la platine 14.

En revanche, quand l'utilisateur remettra le dossier dans la position nominale, la patte arrondie 36 suivra la nervure 29 et permettra le verrouillage du dispositif par l'engrènement de la denture de la platine 14 dans la denture du flasque fixe 5.

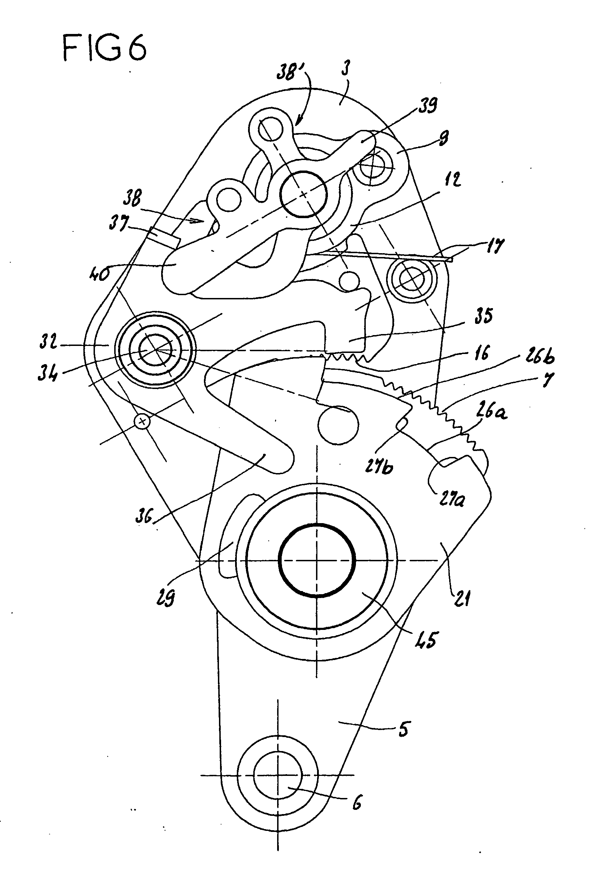

La figure 6 représente une variante de réalisation dans laquelle le dispositif est doté de deux palettes 38 et 38'. Ces deux palettes ont chacune une action spécifique sur le cliquet et sont commandées par une tringle de commande propre dont l'action déclenche une séquence de rotation du dossier spécifique.

Les figures 7 à 9 représentent une autre variante de réalisation qui, tout en présentant les fonctions du dispositif selon l'invention, comprend un nombre de composants moindre.

Dans cette variante de réalisation, le flasque 5 embarque une plaquette 400 Cette plaquette 400 est solidaire du flasque 5. La plaquette 400 présente un bord en gradin constitué d'une succession de surfaces convexes 41a, 41b, 41c délimitées les unes des autres par des surfaces de butée 42a, 42b.

Pour la partie du dispositif liée au dossier, le dispositif présente un flasque 3 recevant la bague 9, celle-ci présentant une came 10 de façon tout à fait similaire aux variantes du dispositif précédemment décrites.

La bague 9, par sa rotation, permet de dégager la platine 14 dont la denture 16 est engagée dans la denture 7 du flasque fixe 5.

En revanche, dans la forme de réalisation des figures 7 à 9, le dispositif se distingue des dispositifs précédemment décrits par la forme du cliquet 32. Le cliquet 32 présente une dent 35 pouvant venir en contact des surfaces d'appui 42a ou 42b. On note également que le cliquet 32 est prolongé d'une patte 44. Le cliquet 32 est monté, de manière pivotante par rapport au flasque 3, en étant engagé sur l'axe de rotation de la platine 14.

Le cliquet 32 est, par ailleurs, sollicité par un ressort 46 dont l'effet élastique tend à le mettre en appui sur les surfaces en gradin de la plaquette 400. Ce ressort 46 permet de compenser les effets de la pesanteur ainsi que de limiter le problème bruyance.

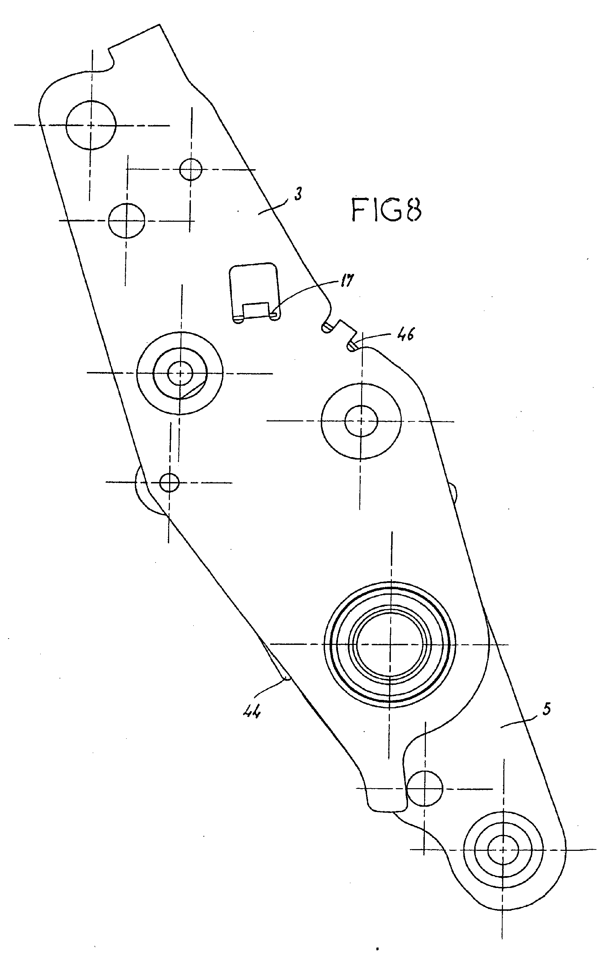

Une autre caractéristique; qu'il convient de préciser concernant cette variante de réalisation, est la présence sur l'autre face du dispositif qui est représentée à la figure 8, d'une corne qui prolonge le flasque 3. Comme on peut le voir sur la figure 8, le flasque 3 est arrêté en rotation par sa corne qui vient en appui contre une butée 49 dépassant de la surface du flasque fixe 5. La rotation vers l'arrière du flasque 3 et donc du dossier du siège est ainsi arrêtée.

Le fonctionnement du dispositif dans cette variante de réalisation est similaire à celui précédemment décrit dans la mesure où une première action sur la bague 9, en vue de la faire pivoter, permet de placer la came 10 en regard de l'encoche 15 formée dans la platine 14. En poursuivant la rotation, la came 10 vient en contact du prolongement 11.

Dans cette position, la platine 14 n'est plus bloquée en rotation et l'action de la came 10 sur le prolongement 11 de la platine 14 fait basculer l'ensemble cliquet 32-platine 14. Les dentures 16 et 7, respectivement de la platine 14 et du flasque 5, sont alors désengagées, ce qui permet alors de faire basculer le dossier vers l'avant. Cette rotation est toutefois interrompue par l'entrée en contact de la dent 35 avec la surface d'appui 42b.

Si l'utilisateur poursuit alors la rotation qu'il exerce sur la bague 9, la came 10 vient alors pousser plus avant le prolongement 11, ce qui a pour effet de faire basculer l'ensemble platine 14-cliquet 32, la dent 35 échappe alors à la surface d'appui 42b. Il n'y a alors plus d'obstacle à la rotation du flasque 3 et, donc, du dossier du siège qui peut basculer complètement vers l'avant.

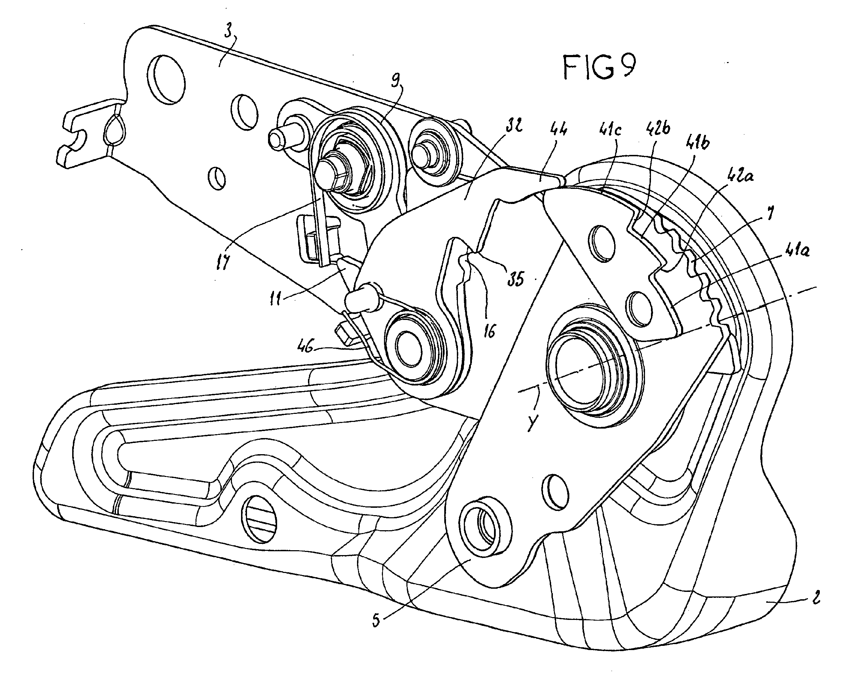

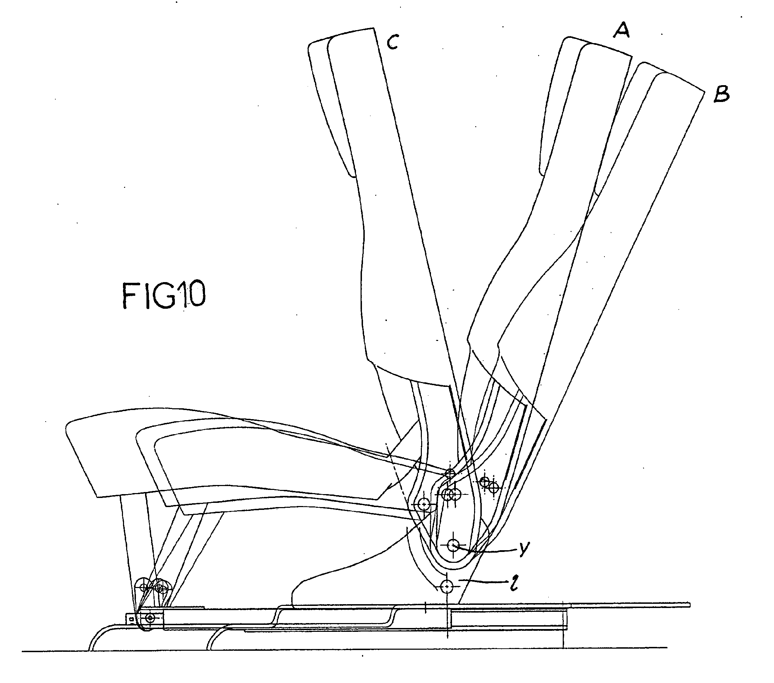

La figure 9 illustre le dispositif dans cette configuration. On note, sur cette figure, que la patte 44 du cliquet suit la surface convexe 41 c de la plaquette 400, si bien que lorsque l'utilisateur voudra replacer le dossier dans sa position d'utilisation habituelle représentée par la lettre A à la figure 10, le cliquet 32 suivra la plaquette 400 au cours de sa rotation et viendra alors se réengager contre la surface d'appui 42a ou 42b. La rotation vers l'arrière du dossier sera, quant à elle, arrêtée lorsque la corne 48 viendra en butée contre le pion 49.

L'invention fournit ainsi un dispositif d'articulation de siège permettant de définir des segments d'inclinaison du dossier correspondant à des besoins d'un utilisateur, notamment l'inclinaison du dossier vers l'avant du dossier, par un accès à l'espace en arrière du dossier ou escamotage complet du siège.

Il va de soi que l'invention n'est pas limitée à la forme de réalisation décrite ci-dessus à titre d'exemple non limitatif mais qu'elle en embrasse au contraire toutes les formes de réalisation.

## Revendications

1. Dispositif de réglage de la position angulaire d'un dossier articulé par rapport à une assise d'un siège selon au moins deux séquences prédéterminées, comprenant :
- un flasque fixe (5) apte à être lié à l'assise supportant un secteur denté (7) et
- un flasque mobile (3) apte à être lié au dossier sur lequel est fixée de manière pivotante une platine (14) présentant un secteur denté (16), le secteur denté (16) pouvant s'engrener dans le secteur denté (7) relié à l'assise dans une configuration verrouillée du siège, et pouvant se désengrener du secteur denté (7) relié à l'assise dans une configuration déverrouillée du siège permettant le réglage de la position angulaire du dossier par rapport à l'assise,
**caractérisé en ce qu'**il comprend :
- un élément (21, 40) présentant un secteur en gradins lié ayant une première surface convexe et au moins une deuxième surface convexe, définissant chacune une séquence angulaire, reliées entre elles par une surface de butée,
- un cliquet (32) fixé sur le flasque mobile (3) présentant une dent (35) pouvant suivre chaque surface convexe jusqu'à venir en appui contre une surface de butée, et
des moyens permettant de pivoter le cliquet (32) pour dégager la dent (35) d'une surface de butée, pour faire passer le siège d'une séquence angulaire à la séquence suivante.

2. Dispositif selon la revendication 1, **caractérisé en ce que** le flasque mobile (3) reçoit une bague (9) munie d'une came (10) venant en appui contre la platine (14) en configuration verrouillée du siège.

3. Dispositif selon la revendication 2, **caractérisé en ce que** la bague (9) est équipée d'une manette (18).

4. Dispositif selon l'une des revendications 1 à 3, **caractérisé en ce que** l'élément présentant un secteur en gradin est constitué par une couronne (21) comprenant :
- une première surface convexe (26a) délimitée par deux surfaces de butée (27a,27b), et
- une deuxième surface convexe (26b) et une troisième surface convexe (26c) reliée à la deuxième surface convexe par une surface de butée (27c).

5. Dispositif selon la revendication 4, **caractérisé en ce qu'**il comprend au moins une palette (38) articulée en rotation comprenant une patte (40) susceptible de venir en appui contre le cliquet (32) pour le faire pivoter autour de son axe en vue du dégagement de la dent (35) d'une surface de butée (27a,27b,27c).

6. Dispositif selon la revendication 5 **caractérisé en ce que** le cliquet (32) présente un ergot (37) contre lequel la patte (40) de la palette (38) vient en appui.

7. Disposition selon la revendication 5 ou la revendication 6, **caractérisé en ce que** le cliquet (32) présente une branche (36) arrondie à son extrémité pouvant venir en appui contre une nervure (29) en arc de cercle pratiquée sur la couronne (21).

8. Dispositif selon la revendication 6 ou la revendication 7, **caractérisé en ce que**
- la bague (9) présente une oreille dans laquelle un pion (13) est engagé, et
- la palette (38) présente une patte (39) pouvant venir en appui contre le pion (13) pour faire pivoter la bague dans une position dans laquelle la came est en regard d'une encoche (15) pratiquée dans la platine (14).

9. Dispositif selon l'une des revendications 5 à 8, **caractérisé en ce que** la palette (38) présente un axe (42) sur lequel une tringle de commande (41) vient se fixer.

10. Dispositif selon l'une des revendications 5 à 9, **caractérisé en ce que** la couronne (21) présente un perçage (25) dans lequel s'engage un bossage (24) dépassant du flasque fixe (5).

11. Dispositif selon l'une des revendications 6 à 10, **caractérisé en ce que** la couronne (21), le flasque fixe (5), le flasque mobile (3) présentent chacun une ouverture circulaire (30,30a,30b), chaque ouverture étant concentrique avec l'axe de rotation (y) du dossier par rapport à l'assise, un palier (37) s'engageant dans chacune des ouvertures (30,30a,30b).

12. Dispositif selon la revendication 11, **caractérisé en ce que** le flasque fixe (5) présente une ouverture (6) par laquelle s'engage un organe de fixation sur l'assise du siège.

13. Dispositif selon l'une des revendications 6 à 12, **caractérisé en ce qu'**il comprend un axe (34) engagé dans le flasque mobile (3) sur lequel pivote la platine (14) et le cliquet (32).

14. Dispositif selon l'une des revendications 1 à 3, **caractérisé en ce que** le moyen présentant un secteur en gradin est une plaquette (40) présentant une première surface convexe (41 a), une deuxième surface convexe (41 b), une troisième surface en gradin (41 c) délimitées entre elles par deux surfaces de butée (42a, 42b).

15. Dispositif selon la revendication 14, **caractérisé en ce que** le cliquet (32) présente une patte (44) susceptible de glisser sur la surface convexe (41c).

16. Dispositif selon la revendication 14 ou la revendication 15, **caractérisé en ce que** le flasque mobile (3) est prolongé d'une corne venant en appui contre une butée (49) en position inclinée vers l'arrière du dossier.

## Claims

1. A device for adjusting the angular position of a seat back articulated with respect to the seating part of a seat according to at least two predetermined sequences, comprising:
- a stationary flange (3) adapted to be connected to the seating part carrying a toothed portion (7), and
- a mobile flange (3) adapted to be connected to the seat back, to which a plate (14) having a toothed portion (16) is secured pivotingly, with the toothed portion (16) being capable of meshing with the toothed portion (7) connected to the seating part in a locked configuration of the seat, and being capable of being released from the toothed portion (7) connected to the seating part in an unlocked configuration of the seat allowing for adjustment of the angular position of the seat back with respect to the seating part,
**characterized in that** it comprises:
- un element (21, 40) having a connected stepped portion having a first convex surface and at least one second convex surface, each defining an angular sequence, mutually connected by an abutment surface,
- a pawl (32) secured on the mobile flange (3) having a tooth (35) capable of following each convex surface until it bears on an abutment surface, and
- means allowing for pivoting of the pawl (32) in order to disengage the tooth (35) from an abutment surface, so as to transfer the seat from one angular sequence to the next.

2. The device according to claim 1, **characterized in that** the mobile flange (3) receives a ring (9) provided with a cam (10) bearing on the plate (14) in the locked configuration of the seat.

3. The device according to claim 2, **characterized in that** the ring (9) is fitted with a handle (18).

4. The device according to any of claims 1 to 3, **characterized in that** the element having a stepped portion is composed of a rim (21) comprising:
- a first convex surface (26a) limited by two abutment surfaces (27a, 27b), and
- a second convex surface (26b) and a third convex surface (26c) connected to the second convex surface by an abutment surface (27c).

5. The device according to claim 4, **characterized in that** it comprises at least one rotatably articulated vane (38) comprising a tab (40) capable of bearing on the pawl (32) to make it pivot around the axis thereof in order to disengage the tooth (35) from an abutment surface (27a, 27b, 27c).

6. The device according to claim 5, **characterized in that** the pawl (32) has a lug (37) on which the tab (40) of the vane (38) is bearing.

7. The device according to claim 5 or claim 6, **characterized in that** the pawl (32) has a rounded branch (36) at the end thereof, which can bear on a circular arc-shaped rib (29) made on the rim (21).

8. The device according to claim 6 or claim 7, **characterized in that**
- the ring (9) has an ear into which a pin (13) is engaged, and
- the vane (38) has a tab (39) capable of bearing on the pin (13) to pivot the ring in a position in which the cam is opposite a notch (15) made in the plate (14).

9. The device according to any of claims 5 to 8, **characterized in that** the vane (38) has an axis (42), to which a control rod (41) is secured.

10. The device according to any of claims 5 to 9, **characterized in that** the rim (21) has a bore (25) into which engages a boss (24) protruding from the stationary flange (5).

11. The device according to any of claims 6 to 10, **characterized in that** the rim (21), the stationary flange (5), the mobile flange (3), each have a circular opening (30, 30a, 30b), each opening being concentric with the axis of rotation (y) of the seat back with respect to the seating part, with a bearing (37) engaging into each of the openings (30, 30a, 30b).

12. The device according to claim 11, **characterized in that** the stationary flange (5) has an opening (6) through which a fixing member engages with the seating part of the seat.

13. The device according to any of claims 6 to 12, **characterized in that** it comprises an axis (34) engaged within the mobile flange (3), on which the plate (14) and the pawl (32) are pivoting.

14. The device according to any of claims 1 to 3, **characterized in that** the means having a stepped portion is a plate (40) having a first convex surface (41 a), a second convex surface (41 b), a third stepped surface (41 c) limited with respect to each other by two abutment surfaces (42a, 42b).

15. The device according to claim 14, **characterized in that** the pawl (32) has a tab (44) capable of sliding on the convex surface (41c).

16. The device according to claim 14 or claim 15, **characterized in that** the mobile flange (3) is extended by a nose bearing on a stop (49) in a position inclined towards the back of the seat back.

## Patentansprüche

1. Vorrichtung zum Einstellen der Winkelposition einer Rücklehne, die gegenüber der Sitzfläche eines Sitzes gemäß mindestens zwei vorherbestimmten Sequenzen gelenkig ist, umfassend:
- einen feststehenden Flansch (3), der dazu geeignet ist, mit der Sitzfläche verbunden zu werden, die einen gezahnten Abschnitt (7) trägt, und
- einen beweglichen Flansch (3), der dazu geeignet ist, mit der Rücklehne verbunden zu werden, an der eine Platte (14) schwenkbar befestigt ist, die einen gezahnten Abschnitt (16) aufweist, wobei der gezahnte Abschnitt (16) mit dem gezahnten Abschnitt (7), der mit der Sitzfläche verbunden ist, in einer verriegelten Konfiguration des Sitzes kämmen kann, und sich aus dem gezahnten Abschnitt (7), der mit der Sitzfläche verbunden ist, in einer entriegelten Konfiguration des Sitzes lösen kann, was ein Einstellen der Winkelposition der Rücklehne im Verhältnis zur Sitzfläche ermöglicht,
**dadurch gekennzeichnet, dass** sie folgendes umfasst:
- ein Element (21, 40), das einen verbundenen gestuften Abschnitt aufweist, der eine erste konvexe Oberfläche und mindestens eine zweite konvexe Oberfläche aufweist, die jeweils einen Winkelsequenz definieren und miteinander über eine Anschlagsfläche verbunden sind,
- eine Klinke (32), die an dem beweglichen Flansch (3) befestigt ist und einen Zahn (35) aufweist, der jeder konvexen Oberfläche folgen kann, bis er an einer Anschlagsfläche zum Anschlag kommt, und
- Mittel, die das Verschwenken der Klinke (32) ermöglichen, um den Zahn (35) aus einer Anschlagsfläche zu lösen, um den Sitz von einer Winkelsequenz auf die andere zu überführen.

2. Vorrichtung nach Anspruch 1, **dadurch gekennzeichnet, dass** der bewegliche Flansch (3) einen Ring (9) aufnimmt, der mit einem Nocken (10) versehen ist, der auf der Platte (14) in der verriegelten Konfiguration des Sitzes zur Auflage kommt.

3. Vorrichtung nach Anspruch 2, **dadurch gekennzeichnet, dass** der Ring (9) mit einem Griff (18) ausgestattet ist.

4. Vorrichtung nach einem der Ansprüche 1 bis 3, **dadurch gekennzeichnet, dass** das Element mit einem gestuften Abschnitt aus einem Kranz (21) besteht, umfassend:
- eine erste konvexe Oberfläche (26a), die von zwei Anschlagsflächen (27a, 27b) begrenzt wird, und
- eine zweite konvexe Oberfläche (26b) und eine dritte konvexe Oberfläche (26c), die mit der zweiten konvexen Oberfläche über eine Anschlagsfläche (27c) verbunden ist.

5. Vorrichtung nach Anspruch 4, **dadurch gekennzeichnet, dass** sie mindestens eine drehbar gelenkige Schaufel (38) umfasst, die eine Lasche (40) umfasst, die an der Klinke (32) zur Auflage kommen kann, um sie um ihre Achse herum zu verschwenken, um den Zahn (35) aus einer Anschlagsfläche (27a, 27b, 27c) zu lösen.

6. Vorrichtung nach Anspruch 5, **dadurch gekennzeichnet, dass** die Klinke (32) einen Ansatz (37) aufweist, auf dem die Lasche (40) der Schaufel (38) zur Auflage kommt.

7. Vorrichtung nach Anspruch 5 oder 6, **dadurch gekennzeichnet, dass** die Klinke (32) einen abgerundeten Schenkel (36) an ihrem Ende aufweist, der auf einer kreisbogenförmigen Rippe (29) zur Auflage kommen kann, die in dem Kranz (21) eingearbeitet ist.

8. Vorrichtung nach Anspruch 6 oder 7, **dadurch gekennzeichnet, dass**
- der Ring (9) eine Öse aufweist, in die ein Stift (13) eingreift, und
- die Schaufel (38) eine Lasche (39) aufweist, die an dem Stift (13) zur Auflage kommen kann, um den Ring in eine Position zu verschwenken, in welcher der Nocken einer Kerbe (15) gegenüberliegt, die in der Platte (14) eingearbeitet ist.

9. Vorrichtung nach einem der Ansprüche 5 bis 8, **dadurch gekennzeichnet, dass** die Schaufel (38) eine Achse (42) aufweist, an der man ein Betätigungsgestänge (41) befestigt.

10. Vorrichtung nach einem der Ansprüche 5 bis 9, **dadurch gekennzeichnet, dass** der Kranz (21) eine Bohrung (25) aufweist, in die eine Erhebung (24) eingreift, die von dem feststehenden Flansch (5) vorsteht.

11. Vorrichtung nach einem der Ansprüche 6 bis 10, **dadurch gekennzeichnet, dass** der Kranz (21), der feststehende Flansch (5), der bewegliche Flansch (3) jeweils eine kreisförmige Öffnung (30, 30a, 30b) aufweisen, wobei jede Öffnung zu der Drehachse (y) der Rücklehne mit Bezug auf die Sitzfläche konzentrisch ist, wobei ein Lager (37) in jede der Öffnungen (30, 30a, 30b) eingreift.

12. Vorrichtung nach Anspruch 11, **dadurch gekennzeichnet, dass** der feststehende Flansch (5) eine Öffnung (6) aufweist, durch die ein Befestigungsorgan an der Sitzfläche des Sitzes eingreift.

13. Vorrichtung nach einem der Ansprüche 6 bis 12, **dadurch gekennzeichnet, dass** sie eine Achse (34) umfasst, die in den beweglichen Flansch (3) eingreift, auf dem die Platte (14) und die Klinke (32) schwenken,

14. Vorrichtung nach einem der Ansprüche 1 bis 3, **dadurch gekennzeichnet, dass** das Mittel mit einem gestuften Abschnitt ein Plättchen (40) ist, das eine erste konvexe Oberfläche (41a), eine zweite konvexe Oberfläche (41 b), eine dritte gestufte Oberfläche (41 c) aufweist, die zueinander durch zwei Anschlagsflächen (42a, 42b) begrenzt sind.

15. Vorrichtung nach Anspruch 14, **dadurch gekennzeichnet, dass** die Klinke (32) eine Lasche (44) aufweist, die auf der konvexen Oberfläche (41c) gleiten kann.

16. Vorrichtung nach Anspruch 14 oder 15, **dadurch gekennzeichnet, dass** der bewegliche Flansch (3) um eine Nase verlängert wird, die auf einem Anschlag (49) in einer Position, die zum hinteren Teil der Rücklehne geneigt ist, zur Anlage kommt.
